# EUROPÄISCHE PATENTSCHRIFT

(11) **EP 2 940 349 B1**
(45) Veröffentlichungstag und Bekanntmachung des Hinweises auf die Patenterteilung: **03.04.2019**
(21) Anmeldenummer: 15156641.1
(22) Anmeldetag: 26.02.2015
(51) Int. Cl.: F16H 61/30

(54) **KRAFTFAHRZEUGGETRIEBE**
MOTOR VEHICLE TRANSMISSION
BOÎTE DE VITESSES DE VÉHICULE AUTOMOBILE

(30) Priorität: 28.04.2014 DE 102014105899
(43) Veröffentlichungstag der Anmeldung: 04.11.2015
(73) Patentinhaber: Magna PT B.V. & Co. KG, 74199 Untergruppenbach (DE)
(72) Erfinder: Rühle, Günter, 74369 Löchgau (DE); Wolf, Walter, 71672 Marbach a.N. (DE); Aubert, Michael, 71701 Schwieberdingen (DE); Kohlhaas, Stefan, 52070 Aachen (DE)
(74) Vertreter: Rausch, Gabriele

(56) Entgegenhaltungen:
- EP-A1- 1 544 492
- WO-A2-2008/055464
- DE-A1- 10 125 172
- DE-A1- 19 637 001
- DE-A1- 19 944 653
- DE-A1-102005 019 516
- DE-A1-102007 018 499
- DE-A1-102008 059 267
- DE-A1-102010 001 069
- DE-A1-102010 029 400
- GB-A- 411 548
- GB-A- 656 665

## Beschreibung

Die vorliegende Erfindung betrifft ein Kraftfahrzeuggetriebe mit einem Getriebegehäuse, das einen Zentralgehäuseabschnitt aufweist, der eine Längsachse aufweist, und das im Bereich von Längsenden des Zentralgehäuseabschnittes jeweils einen sich im Wesentlichen radial erstreckenden Wandabschnitt aufweist, mit wenigstens einer Welle, die in dem Getriebegehäuse entlang der Längsachse ausgerichtet und drehbar gelagert ist, mit einer Mehrzahl von Schaltkupplungsanordnungen zum Ein- und Auslegen von Gangstufen des Kraftfahrzeuggetriebes, die jeweils über ein in Bezug auf das Getriebegehäuse axial verschieblich gelagertes Schaltglied betätigbar sind, und mit einer hydraulischen Aktuatoranordnung, mittels der die Schaltglieder verschiebbar sind.

GB411548 offenbart die Merkmale des Oberbegriffes des Anspruchs 1.

Auf dem Gebiet der Kraftfahrzeuggetriebe ist es bekannt, Schaltkupplungsanordnungen automatisiert zu betätigen. Die Schaltkupplungsanordnungen können beispielsweise durch ein Schaltkupplungspaket gebildet sein, das zwei Schaltkupplungen zum Einrichten von zwei Gangstufen beinhaltet. Die Schaltkupplungen sind dabei in der Regel mittels einer gemeinsamen Schaltmuffe betätigbar, die zwischen einer Neutralposition und zwei Gangpositionen axial verschiebbar ist. Die Schaltmuffe ist dabei mittels eines Schaltgliedes betätigbar, das beispielsweise eine axial angeordnete Schaltstange und ein damit gekoppeltes Schaltelement wie eine Schaltgabel beinhaltet.

Zur automatisierten Betätigung derartiger Schaltkupplungsanordnungen sind elektromechanische Aktuatoranordnungen bekannt, wie beispielsweise Schaltwalzen. Diese haben den Nachteil, dass die Gangstufen in der Regel nur sequenziell einrichtbar sind. Mehrfachschaltungen über wenigstens eine, insbesondere zwei Gangstufen hinweg sind daher vergleichsweise zeitintensiv. Da Steuerstrategien zum Betrieb von Kraftfahrzeugen generell auf niedrige Drehzahlen abstellen (aus Gründen der Verbrauchsminimierung), wird davon ausgegangen, dass derartige Mehrfachschaltungen in der Zukunft immer wichtiger werden.

Ferner ist es bekannt, zur Betätigung von Schaltkupplungsanordnungen eines Kraftfahrzeuggetriebes hydraulische Aktuatoranordnungen zu verwenden. Bei diesen ist jedem Schaltglied vorzugsweise ein eigener Hydraulikzylinder zugeordnet. Hierdurch können Mehrfachrückschaltungen deutlich schneller durchgeführt werden, da ausgehend von einer eingelegten Zielgangstufe direkt der Hydraulikzylinder betätigbar ist, dem die einzulegende Zielgangstufe einer solchen Mehrfachrückschaltung zugeordnet ist.

Aus dem Dokument EP 1 888 946 B1 ist ein Vorgelegegetriebe mit einem Mechatronik-Modul bekannt, das an eine seitliche Öffnung eines Getriebegehäuses montiert wird. Das Mechatronik-Modul weist dabei mehrere der Innenseite des Getriebes zugewandte Schaltzylinder auf, die mit jeweiligen Schaltgliedern gekoppelt sind. In dem Mechatronik-Modul ist eine Mehrzahl von Ventilen zur Verteilung von Fluid vorgesehen.

Ferner ist aus dem Dokument DE 199 44 653 A1 ein hydraulisches System zum Betätigen von Komponenten in einem Fahrzeug bekannt, wobei eine Hydraulikeinrichtung, ein Aktuator und eine Hydraulikleitung vor dem Einbau in das Fahrzeug zu einer funktionalen Einheit zusammengesetzt sind.

Das Dokument EP 1 544 492 A1 offenbart einen hydraulischen Funktionsblock, in den Steuerorgane, eine Gebereinheit für eine Reibkupplung und ein Zylindersystem integriert sind, mittels dessen eine Schaltwelle in einer Drehrichtung und in einer Längsrichtung betätigbar ist.

Ferner ist es aus dem Dokument DE 10 2010 001 069 A1 bekannt, zur Ansteuerung von hydraulischen Schaltzylindern ein Drehschieberventil vorzusehen.

Schließlich ist es bekannt, Hydraulikzylinder in das Gehäuse des Getriebes zu integrieren, wobei die Funktion von Dichtungen des Hydraulikzylinders stark von der Porosität des Getriebegehäuses abhängig ist, das in der Regel als Gussteil ausgeführt ist. Hierbei ist ferner ein hoher Montageaufwand am Getriebe erforderlich, da viele Einzelkomponenten wie Kolben, Dichtungen, Sensoren, Stecker usw. separat montiert werden müssen und erst im Gesamtgetriebe geprüft werden können.

Auch ist es bekannt, einzelne Hydraulikzylinder an Schaltstangen festzulegen, die fertig gespritzte Kunststoffkolben und -zylinder aufweisen.

Vor diesem Hintergrund ist es eine Aufgabe der Erfindung, eine verbesserte Aktuatoranordnung sowie ein verbessertes Kraftfahrzeuggetriebe anzugeben.

Die erfindungsgemäße Aktuatoranordnung kann aufgrund der integrierten Fluidverteilereinrichtung vormontiert und getestet werden. Das verwendete Fluid kann ohne großen Aufwand innerhalb des Getriebegehäuses zu dem Aktuatorgehäuse zugeführt werden. Aufwendige Druckölkanäle innerhalb des Gehäuses sind folglich vorzugsweise nicht notwendig. Das verwendete Fluid kann das gleiche sein, das innerhalb des Getriebegehäuses auch zum Schmieren und/oder Kühlen von anderen Komponenten verwendet wird, wie beispielsweise den darin enthaltenen Radsätzen.

Die Drehschieberventileinrichtung kann mehrere Drehschieberventile beinhalten, beinhaltet jedoch vorzugsweise nur ein einzelnes Drehschieberventil, das mit einem Druckanschluss des Aktuatorgehäuses verbunden ist und über das vorzugsweise sämtliche Hydraulikzylinder der Aktuatoranordnung ansteuerbar sind. Dabei ist an dem Aktuatorgehäuse vorzugsweise auch ein Anschluss an einen Niederdruckbereich wie einen Tank bzw. einen Fluidsumpf ausgebildet.

Die Hydraulikzylinder sind vorzugsweise als doppelt wirkende Hydraulikzylinder ausgebildet, die jeweils zwei Anschlüsse haben, um eine mit dem gekoppelten Schaltglied verbundene Schaltkupplungsanordnung in eine Neutralposition oder in eine von zwei Schaltpositionen versetzen zu können.

Das Drehschieberventil ist vorzugsweise so ausgebildet, dass jeweils nur ein mit einem Hydraulikzylinder verbundener Drehanschluss mit dem Druckanschluss verbunden ist, wohingegen sämtliche anderen Drehanschlüsse parallel mit dem Niederdruckanschluss bzw. Tankanschluss verbunden sind.

Die Drehanschlüsse des Drehschieberventils können radial oder axial in Bezug auf Längsachsen der Hydraulikzylinder angeordnet sein.

Die Aktuatoranordnung kann einen weiteren Hydraulikzylinder für eine Parksperrenanordnung beinhalten, der vorzugsweise ebenfalls über das Drehschieberventil ansteuerbar ist. Der für die Parksperrenanordnung verwendete Hydraulikzylinder kann ein einfach wirkender Zylinder sein.

Die Aktuatoranordnung ist sowohl für automatisierte Schaltgetriebe als auch für Doppelkupplungsgetriebe verwendbar, wie auch für andere automatisierte Getriebe.

In allen Fällen sind durch die Maßnahme, jeder Schaltkupplungsanordnung einen eigenen Hydraulikzylinder zuzuordnen, beliebige Mehrfachrückschaltungen sehr schnell und einfach möglich.

Das Drehschieberventil lässt sich nach einem Reset einer Steuereinrichtung vergleichsweise einfach mittels geeigneter Sensoren einlernen. Die Drehposition eines verdrehbar gelagerten Steuerschiebers des Drehschieberventils kann über einen Inkrementalsensor erfasst werden, oder über geeignete Drehpositionserfassungsmittel in einem Antriebsmotor des Drehschieberventils, oder durch einen absoluten Drehwinkelsensor, der drehfest mit dem Drehschieber gekoppelt ist.

Der Antriebsmotor ist vorzugsweise ein Elektromotor, der als Schrittmotor oder als bürstenloser Gleichstrommotor ausgebildet sein kann.

Die Aufgabe wird somit vollkommen gelöst.

Gemäß einer weiteren bevorzugten Ausführungsform, die in Verbindung mit dem Oberbegriff des Anspruchs 1 eine eigene Erfindung darstellt, weist die Drehschieberventileinrichtung ein Drehschieberventil auf, das mittels eines Elektromotors antreibbar ist, dessen Drehachse parallel zu den Hydraulikzylindern ausgerichtet ist.

Hierdurch kann eine radial kompakte Bauweise erzielt werden.

Gemäß einer weiteren bevorzugten Ausführungsform, die in Verbindung mit dem Oberbegriff des Anspruchs 1 eine eigene Erfindung darstellt, sind an dem Aktuatorgehäuse Befestigungsmittel zum axialen Befestigen des Aktuatorgehäuses an einem Getriebegehäuse ausgebildet.

Das Aktuatorgehäuse erstreckt sich innerhalb des Getriebegehäuses vorzugsweise im Wesentlichen quer zu einer Längsachse des Getriebegehäuses. Die Mittel zum axialen Befestigen des Aktuatorgehäuses an dem Getriebegehäuse können Schraubverbindungen oder andere Verbindungen beinhalten.

Das Aktuatorgehäuse kann bei dieser Ausführungsform im Bereich von Längsenden des Getriebegehäuses montiert werden, wobei die Hydraulikzylinder parallel mit der Längsachse des Kraftfahrzeuggetriebes ausgerichtet sind, kann jedoch auch in einer axial mittleren Position innerhalb des Kraftfahrzeuggetriebes montiert werden.

An der Aktuatoranordnung ist vorzugsweise eine elektrische Steckverbindung ausgebildet, die mit einer Steuereinrichtung verbindbar ist. Die elektrische Steckverbindung ist vorzugsweise abgedichtet, so dass die elektrische Funktionalität nicht durch Spritzöl innerhalb des Getriebegehäuses gefährdet ist. Gegebenenfalls ist es auch möglich, die elektrische Steckverbindung so auszugestalten, dass diese durch eine Durchbrechung in dem Getriebegehäuse nach außen hervortritt, um den elektrischen Anschluss mit dem Steuergerät außen am Getriebegehäuse vorzunehmen. In diesem Fall ist für eine geeignete Gehäuseabdichtung im Bereich der Durchbrechung zu sorgen.

Eine Fluidversorgungseinrichtung zum Bereitstellen von Druckfluid für den Druckanschluss kann ebenfalls innerhalb des Getriebegehäuses angeordnet sein. Die Fluidversorgungseinrichtung kann in an sich herkömmlicher Weise eine Pumpe und mehrere Druckregelventile beinhalten. Die Fluidversorgungseinrichtung kann jedoch auch einen Pumpenaktuator beinhalten, bei dem eine Pumpe elektromotorisch angetrieben ist und der Druck an einem Druckanschluss der Pumpe durch Regeln der Drehzahl des Elektromotors eingestellt wird. In diesem Fall sind zwischen dem Druckanschluss der Pumpe und dem Druckanschluss des Aktuatorgehäuses vorzugsweise keine Proportionalventile wie Druckregelventile angeordnet.

Gemäß einer weiteren bevorzugten Ausführungsform, die in Verbindung mit dem Oberbegriff des Anspruchs 1 eine eigene Erfindung darstellt, ist an dem Aktuatorgehäuse eine Mehrzahl von Lagerstellen zur Führung von jeweiligen Schaltgliedern ausgebildet.

Das Aktuatorgehäuse übernimmt bei dieser Ausführungsform zumindest teilweise die Funktion, die Schaltglieder in radialer Richtung axial verschieblich zu lagern. Diese Funktion wird gewöhnlich durch geeignete Ausnehmungen in dem Getriebegehäuse realisiert.

Die Lagerstellen sind vorzugsweise parallel mit den Hydraulikzylindern ausgerichtet, so dass die an den Lagerstellen gelagerten Schaltglieder auf einfache Weise mit den Hydraulikzylindern koppelbar sind, mittels geeigneter Koppeleinrichtungen.

Bevorzugt sind die Schaltglieder Schaltstangen und die Lagerstellen dienen zum Lagern von Enden der Schaltstangen, obgleich die Lagerstellen auch als Durchführungen ausgebildet sein können, um Schaltstangen in einem mittleren Bereich zu lagern.

Bei der Ausführung, bei der die Lagerstellen jeweilige Enden von Schaltstangen lagern, die in dem Getriebegehäuse parallel zu der Längsachse des Getriebes axial versetzbar ausgebildet sind, kann die Kopplung zwischen den Schaltstangen und Kolben der Hydraulikzylinder auf einfache Weise erfolgen, indem die Aktuatoranordnung und die Schaltstangen relativ zueinander axial versetzt werden. Die vormontierte Aktuatoranordnung kann folglich in axialer Richtung auf in dem Getriebegehäuse bereits an Schaltkupplungsanordnungen angekoppelte Schaltstangen aufgeschoben werden.

Gemäß einer weiteren bevorzugten Ausführungsform ist an dem Aktuatorgehäuse wenigstens ein Positionssensor ausgebildet, der die Position eines Kolbens eines Hydraulikzylinders erfasst.

Vorzugsweise ist allen Kolben der Hydraulikzylinder jeweils ein Positionssensor zugeordnet. Signale der Positionssensoren können über eine elektrische Steckverbindung nach außen zu einem Steuergerät geführt werden. Die Position des Kolbens kann dabei insbesondere berührungslos erfasst werden, beispielsweise mittels Hall-Sensoren. Anstelle einer Erfassung der Position des Kolbens kann auch eine Position einer hiermit gekoppelten Kolbenstange oder einer hiermit gekoppelten Schaltstange erfasst werden. All dies soll durch den Begriff der Erfassung der Position eines Kolbens mit abgedeckt werden.

Gemäß einer weiteren bevorzugten Ausführungsform ist der Drehschieberventileinrichtung wenigstens ein Anschlag an dem Aktuatorgehäuse zugeordnet, mittels dessen die Drehposition der Drehschieberventileinrichtung referenzierbar ist, wenn zum Beispiel Relativwert-Sensoren verwendet werden.

Hierbei kann ein Drehschieberventil der Drehschieberventileinrichtung beispielsweise nach einem Reset eines Steuergerätes gezielt gegen den Anschlag gefahren werden, um auf diese Weise wieder eine Nullposition zu referenzieren, aufgrund der dann unterschiedliche Drehstellungen angefahren werden können.

Auf den Anschlag im Aktuatorgehäuse kann gegebenenfalls verzichtet werden, wenn zur Positionserfassung des Drehschiebers ein Absolutwertgeber verwendet wird.

Insgesamt ist es ferner vorteilhaft, wenn das Aktuatorgehäuse aus Kunststoff hergestellt ist.

Durch diese Maßnahme kann zunächst Gewicht eingespart werden. Das Kunststoff-Aktuatorgehäuse kann beispielsweise zumindest abschnittsweise im Spritzgussverfahren hergestellt werden. Ein Gehäuse für ein Drehschieberventil kann folglich durch das Aktuatorgehäuse gebildet sein. Ein in dem Gehäuse gelagerter Steuerschieber des Drehschieberventils kann ggf. ebenfalls aus Kunststoff hergestellt sein.

In ein derart hergestelltes Aktuatorgehäuse können Sensorleitungen für Positionssensoren vorzugsweise eingespritzt werden, beispielsweise in Form von Stanzgittern oder in Form von Flexfolie, wobei diese Sensorleitungen dann innerhalb des Aktuatorgehäuses bis hin zu einer elektrischen Steckereinrichtung geführt werden können.

Ferner können Hydraulikkanäle zur Verbindung des Drehschieberventils mit jeweiligen Anschlüssen der Hydraulikzylinder ebenfalls direkt in dem Kunststoffgehäuse ausgebildet werden (bei einem Spritzgussverfahren beispielsweise durch geeignete Spritzgussschieber, die nach dem Spritzgießen entfernt werden und folglich die Kanäle bilden).

Von besonderem Vorzug ist es ferner, wenn die Hydraulikzylinder durch das Aktuatorgehäuse gebildet sind.

Der Zylinderraum, in dem ein jeweiliger Kolben geführt ist, kann folglich durch das Aktuatorgehäuse direkt gebildet sein. Ferner können auch die Kolben durch Kunststoff gebildet sein.

Hierdurch kann eine hohe Fluiddichtigkeit realisiert werden, die insbesondere unabhängig ist von der Porosität des Getriebegehäuses, das in der Regel aus metallischem Gussmaterial hergestellt ist.

Auch sämtliche Dichtungen können direkt in das Aktuatorgehäuse integriert werden.

Folglich kann die Aktuatoranordnung als komplett vormontiertes Modul bereitgestellt werden, das zum Testen lediglich über die elektrische Steckverbindung an ein elektrisches Test-Steuergerät angeschlossen wird und das über den Druckanschluss und einen Tankanschluss mit einer hydraulischen Test-Fluidversorgungseinrichtung verbunden wird.

Insgesamt lassen sich die vielen Einzelkomponenten, die zur hydraulischen Schaltstangenbetätigung und zur Auswahl der Hydraulikzylinder erforderlich sind, in einem Modul zusammenfassen, das als eigenständige Einheit vormontiert und geprüft werden kann und das als komplette geprüfte Einheit zur Getriebemontage bereitgestellt werden kann.

Die Aktuatoranordnung kann dabei die Funktionen eines hydraulischen Kraftstellers für die Schaltstangen zur Betätigung der Gänge und ggf. einer Parksperre, einer einseitigen Lagerung von Schaltstangen, einer Auswahl der zu bedruckenden Zylinderkammern sowie eine Positionserfassung der Schaltstangen in einem vormontierten und geprüften Modul bereitstellen.

Die obige Aufgabe wird ferner gelöst durch ein Kraftfahrzeuggetriebe der eingangs genannten Art, wobei die Aktuatoranordnung ein Aktuatorgehäuse aufweist, an dem eine Mehrzahl von Hydraulikzylindern festgelegt ist und an dem eine Fluidverteilereinrichtung ausgebildet ist, die mit den Hydraulikzylindern verbunden ist, wobei die Aktuatoranordnung als vormontierte Einheit ausgebildet ist, die im Bereich von einem der Wandabschnitte des Getriebegehäuses angeordnet ist.

Durch die Maßnahme, die Aktuatoranordnung an einem der Wandabschnitte anzuordnen, kann das Aktuatorgehäuse sich innerhalb des Getriebegehäuses im Wesentlichen quer zu der Längsachse des Getriebegehäuses erstrecken, wobei die Hydraulikzylinder parallel zueinander und zu dieser Längsachse ausgerichtet sind. Die Verbindung der Schaltstangen mit der Aktuatoranordnung kann auf diese Weise einfach erfolgen. Ferner ist es hierbei besonders günstig möglich, die Schaltstangen einseitig an dem Aktuatorgehäuse zu lagern.

Die Aufgabe wird somit vollkommen gelöst.

Ferner ist es bei dem Kraftfahrzeuggetriebe beansprucht, dass das Aktuatorgehäuse sich quer zu der Längsachse erstreckt und axial an dem Getriebegehäuse festgelegt ist.

Wie oben erläutert, ist es ferner vorteilhaft, wenn die Schaltglieder jeweils an dem Aktuatorgehäuse der Aktuatoranordnung gelagert sind.

Generell ist es denkbar, die Aktuatoranordnung an dem dem Eingang des Kraftfahrzeuggetriebes abgewandten Ende zu montieren.

Bevorzugt ist es jedoch, wenn ein erster Wandabschnitt der Wandabschnitte einem Eingang des Kraftfahrzeuggetriebes zugewandt ist und wenn die Aktuatoranordnung im Bereich von dem ersten Wandabschnitt angeordnet ist.

Der erste Wandabschnitt kann dabei insbesondere ein Wandabschnitt sein, der das Getriebegehäuse von einem Kupplungsgehäuse trennt. Das Kupplungsgehäuse kann zumindest teilweise in Form einer Kupplungsglocke einstückig mit dem Getriebegehäuse ausgebildet sein.

Gemäß einer besonders bevorzugten Ausführungsform weist der erste Wandabschnitt des Getriebegehäuses dabei eine Öffnung auf, in die das Aktuatorgehäuse der Aktuatoranordnung eingesetzt ist.

Die Aktuatoranordnung bzw. deren Aktuatorgehäuse bildet folglich einen Teil des ersten Wandabschnittes und kann so mit dem ersten Wandabschnitt verbunden sein, dass eine Abdichtung zwischen dem Inneren des Getriebegehäuses und dem Inneren des Kupplungsgehäuses realisierbar ist. In manchen Fällen wird in beiden Gehäusen jedoch das gleiche Fluid verwendet, so dass eine hundertprozentige Abdichtung nicht erforderlich ist.

Durch diese Maßnahme ist es ferner auf einfache Weise möglich, die Aktuatoranordnung als vormontierte Einheit zu montieren, und zwar über die Öffnung in dem ersten Wandabschnitt, so dass in dem Getriebegehäuse bereits die Wellen, Zahnräder, Schaltkupplungsanordnungen etc. vormontiert sein können. Bei der Montage wird das Aktuatorgehäuse folglich in axialer Richtung hin zu der Öffnung geschoben, wobei die Enden der Schaltstangen vorzugsweise in Lagerstellen des Aktuatorgehäuses greifen und mit Kolben der jeweiligen Hydraulikzylinder gekoppelt werden.

Das Drehschieberventil kann direkt von einem Antriebsmotor betätigt werden, wobei eine Drehachse des Antriebsmotors koaxial zu einer Drehachse eines Steuerschiebers des Drehschieberventils angeordnet ist. Der Steuerschieber des Drehschieberventils kann jedoch auch mit einem Zahnrad verbunden sein, so dass der Antrieb des Drehschieberventils indirekt über eine Zahnradstufe oder über ein Planetengetriebe erfolgen kann.

Der Steuerschieber (Drehschieber) wird selbst vorzugsweise als Scheibe mit einer Ablaufbohrung ausgeführt. Durch eine Drehbewegung der Scheibe mittels des Antriebsmotors kann die Ablaufbohrung über einen entsprechenden Kanal für den zu bedruckenden Hydraulikzylinder positioniert werden. Der Hydraulikdruck wird somit in die gewünschte Zylinderkammer geleitet und die Schaltstange kann dadurch axial bewegt werden. Alle anderen Zylinderanschlüsse werden vorzugsweise mittels des Drehschieberventils mit einem Niederdruckbereich verbunden, insbesondere auf Tank gelegt. In einer Ausführungsform des Drehschieberventils sind alle hydraulischen Anschlüsse axial bzw. parallel zur Rotationsachse des Dreh-Steuerschiebers angeordnet. Bei der Ausführung des Steuerschiebers als Scheibe kann die Konstruktion vorzugsweise so ausgeführt werden, dass die Scheibe durch den Betätigungsdruck axial in Richtung der Ablaufbohrung zur Zylinderkammer gedrückt wird und somit eine robuste axiale Dichtfunktion erreicht werden kann.

Der Steuerschieber des Drehschiebers kann jedoch auch als Kegelstumpf mit radialer Anordnung der Ablaufbohrungen ausgeführt sein. Hierbei kann der Hydraulikdruck auf der Seite mit dem großen Kegeldurchmesser wirkend zugeführt werden, um den Kegelstumpf ins Gehäuse zu drücken und dadurch eine Dichtfunktion hin zu den radialen Ablaufbohrungen zu gewährleisten.

Insgesamt ergibt sich mit der Erfindung je nach Ausführungsform wenigstens einer der folgenden Vorteile. Es sind weniger mechanische Bearbeitungen im Getriebegehäuse notwendig. Die Funktionalität der Aktuatoranordnung ist unabhängig von der Porosität des Getriebegehäuses. Die Aktuatoranordnung kann als vormontierte und geprüfte Einheit zur Getriebemontage bereitgestellt werden. Es ergibt sich eine Gewichtsreduzierung, wenn das Aktuatorgehäuse aus Kunststoff hergestellt werden kann. Bei der Getriebemontage ergibt sich ein geringerer Montageaufwand. Qualitätskosten in Folge von Rückmontagen nach negativer EOL-Abnahme können reduziert werden. Durch die hydraulische Einzelstangenbetätigung ist eine wahlfreie Gangschaltung möglich. Im Gegensatz zu einer elektromechanisch betätigten Schaltung können Mehrfachschaltungen direkt ausgeführt werden, ohne dass Zwischengänge zwangsweise durchgeschaltet werden müssen. Dies kann die Schaltzeiten bei Mehrfachrückschaltungen reduzieren und die Schaltdynamik verbessern. Aufgrund der hydraulischen Aktuierung ergeben sich ferner Vorteile hinsichtlich der Geräuschentwicklung. Denn bei elektromechanischen Betätigungselementen kann es zu Geräuschen bzw. akustischen Auffälligkeiten kommen, wenn Gangschaltungen durchgeführt werden, und zwar infolge der Rückwirkung aus der Synchronisierung auf spielbehaftete mechanische Betätigungselemente.

Hohlräume innerhalb des Aktuatorgehäuses können zur Speicherung von Getriebefluid genutzt werden, um den Fluidspiegel im Getriebe zur Wirkungsgradverbesserung abzusenken.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines erfindungsgemäßen Kraftfahrzeuggetriebes;
- Fig. 2: eine schematische Darstellung einer erfindungsgemäßen Aktuatoranordnung;
- Fig. 3: eine schematische Darstellung eines Drehschieberventils zur Betätigung von Hydraulikzylindern der Aktuatoranordnung;
- Fig. 4: eine perspektivische Ansicht einer weiteren Ausführungsform einer Aktuatoranordnung;
- Fig. 5: eine getriebeseitige perspektivische Ansicht der Aktuatoranordnung der Fig. 4;
- Fig. 6: eine Längsschnittansicht durch eine Ausführungsform eines Drehschieberventils für eine erfindungsgemäße Aktuatoranordnung;
- Fig. 7: eine schematische Axialansicht einer weiteren Ausführungsform einer erfindungsgemäßen Aktuatoranordnung; und
- Fig. 8: eine seitliche Ansicht der Aktuatoranordnung der Fig. 7, eingebaut in eine Öffnung eines Wandabschnittes eines Getriebegehäuses.

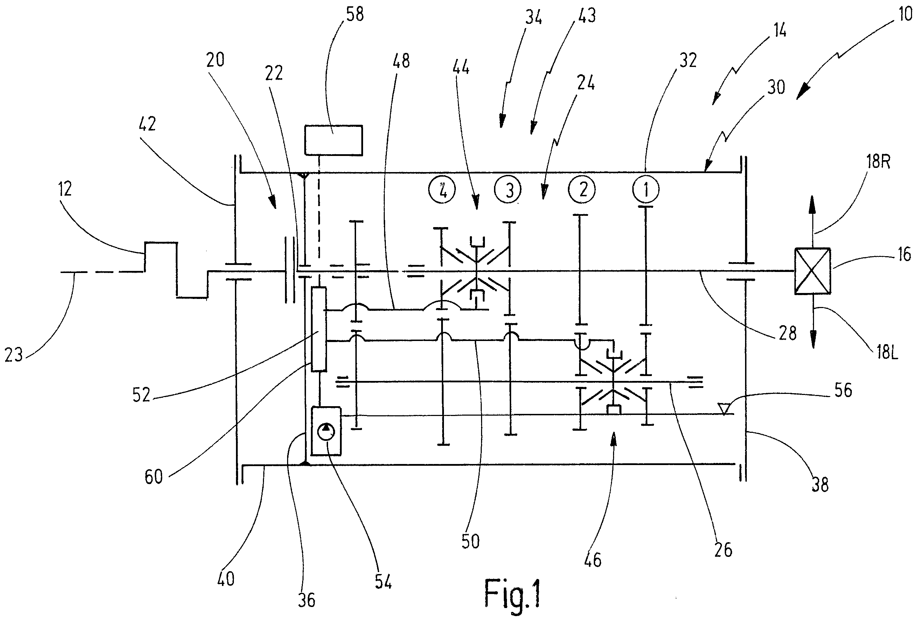

In Fig. 1 ist ein Antriebsstrang für ein Kraftfahrzeug schematisch dargestellt und generell mit 10 bezeichnet. Der Antriebsstrang 10 beinhaltet einen Antriebsmotor 12 wie einen Verbrennungsmotor oder eine Hybrid-Antriebseinheit. Ferner weist der Antriebsstrang 10 eine Getriebeanordnung 14 auf, die eingangsseitig mit dem Antriebsmotor 12 verbunden ist und die ausgangsseitig mit einem Differential 16 verbunden ist, mittels dessen Antriebsleistung auf angetriebene Räder 18L, 18R verteilbar ist.

Die Getriebeanordnung 14 beinhaltet eine Reibkupplungsanordnung 20. Die Reibkupplungsanordnung 20 kann durch eine einzelne Reibkupplung oder durch eine Doppelkupplungsanordnung gebildet sein, die eingangsseitig mit dem Antriebsmotor 12 verbunden ist. Ausgangsseitig ist die Reibkupplungsanordnung 20 mit einer Eingangswellenanordnung 22 verbunden, die durch eine einzelne Welle oder durch eine Doppelwellenanordnung gebildet sein kann. Die Eingangswellenanordnung 22 definiert eine Längsachse 23 der Getriebeanordnung 14.

Die Getriebeanordnung 14 weist ferner ein Stufengetriebe 24 auf, das in Vorgelegebauweise ausgeführt ist. Dieses ist in Fig. 1 vereinfacht dargestellt, mit einer Vorgelegewelle 26 und einer Ausgangswelle 28, wobei an einer der oben genannten Welle Losräder drehbar gelagert sein können, die mit jeweiligen Festrädern in Eingriff stehen und jeweilige Radsätze zum Bilden von Gangstufen des Stufengetriebes 24 bilden.

Die Getriebeanordnung 14 weist ferner eine Gehäuseanordnung 30 auf. Die Gehäuseanordnung 30 beinhaltet ein Getriebegehäuse 32, das einen Zentralgehäuseabschnitt 34 beinhaltet, der sich generell nach der Art eines Zylinders parallel zur Längsachse 23 erstreckt. An einem Längsende weist das Getriebegehäuse 32 einen ersten Wandabschnitt 36 auf. Am anderen Längsende weist das Getriebegehäuse 32 einen zweiten Wandabschnitt 38 auf. Vorliegend ist der zweite Wandabschnitt 38 durch einen Getriebegehäusedeckel gebildet.

Benachbart zu dem ersten Wandabschnitt 36 kann an dem Getriebegehäuse 32 eine Kupplungsglocke 40 ausgebildet sein, in der die Reibkupplungsanordnung 20 aufgenommen ist. Zum Abdichten des Kupplungsgehäuses ist ein Kupplungsdeckel 42 vorgesehen, der die Kupplungsglocke 40 verschließt.

Bei der Getriebeanordnung 14 kann es sich um ein automatisiertes Schaltgetriebe oder um ein Doppelkupplungsgetriebe handeln.

Das Stufengetriebe 24 weist eine Schaltanordnung 43 auf. Die Schaltanordnung 43 beinhaltet eine erste Schaltkupplungsanordnung 44 und eine zweite Schaltkupplungsanordnung 46. Die erste Schaltkupplungsanordnung 44 ist vorliegend zwischen zwei Losrädern angeordnet, die zum Einlegen der Gangstufen 3 und 4 dienen, und zwar an der Ausgangswelle 28. Die zweite Schaltkupplungsanordnung 46 ist zwischen zwei Losrädern angeordnet, die an der Vorgelegewelle drehbar gelagert sind und den Gangstufen 1 und 2 zugeordnet sind. Diese Darstellung ist jedoch rein beispielhafter Natur. In der Regel weist das Stufengetriebe 24 mehr als vier Vorwärtsgangstufen und wenigstens eine Rückwärtsgangstufe auf. Zudem ist in dem Stufengetriebe 24 in der Regel eine in Fig. 1 nicht näher bezeichnete Parksperrenanordnung enthalten, die in der Regel mit der Ausgangswelle 28 verbunden ist.

Die Schaltkupplungsanordnungen 44, 46 sind jeweils als Schaltkupplungspakete ausgebildet, die zwei Schaltkupplungen aufweisen, die mittels einer gemeinsamen Schaltmuffe betätigbar sind, wie es im Stand der Technik hinlänglich bekannt ist. Die Schaltmuffe der ersten Schaltkupplungsanordnung 44 ist mit einem ersten Schaltglied 48 in axialer Richtung formschlüssig gekoppelt. Die zweite Schaltkupplungsanordnung 46 ist mit einem zweiten Schaltglied 50 in axialer Richtung formschlüssig gekoppelt. Die Schaltglieder 48, 50 beinhalten in der Regel jeweils Schaltelemente wie Schaltgabeln, die in die Schaltmuffen der Schaltkupplungsanordnungen 44, 46 eingreifen, sowie in Fig. 1 schematisch dargestellte Schaltstangen, die sich parallel zu der Längsachse 23 erstrecken und innerhalb des Getriebegehäuses 32 axial verschieblich gelagert sind.

Zum axialen Verschieben der Schaltglieder 48, 50 ist eine Aktuatoranordnung 52 vorgesehen. Die Aktuatoranordnung 52 ist im Inneren des Getriebegehäuses angeordnet, und zwar benachbart zu dem ersten Wandabschnitt 36. Die Aktuatoranordnung 52 ist als hydraulische Aktuatoranordnung ausgebildet und ist zum einen mit einer Fluidversorgungseinrichtung 54 verbunden, die vorzugsweise Fluid verwendet, das auch zur Schmierung von Bauelementen des Stufengetriebes 24 verwendet wird. In Fig. 1 ist bei 56 schematisch ein Fluidsumpf angedeutet, der mit der Fluidversorgungseinrichtung 54 verbunden ist. Die Fluidversorgungseinrichtung 54 ist dazu ausgebildet, Fluid mit einem bestimmten Druck bereitzustellen, mittels dessen jeweils ein Schaltglied 48, 50 in axialer Richtung bewegt werden kann.

Die Aktuatoranordnung 52 ist ferner mit einer elektronischen Steuereinrichtung 58 verbunden, wie es durch eine gestrichelte Linie angedeutet ist. Die Steuereinrichtung 58 empfängt von der Aktuatoranordnung 52 vorzugsweise Positionssignale, die der jeweiligen axialen Position der Schaltglieder 48, 50 entsprechen. Ferner ist die Steuereinrichtung 58 vorzugsweise mit der Fluidversorgungseinrichtung 54 verbunden, obgleich dies in Fig. 1 nicht dargestellt ist.

Die Aktuatoranordnung 52 weist ein Aktuatorgehäuse 60 auf, das sich in eine Richtung quer zu der Längsachse 23 erstreckt und benachbart zu dem ersten Wandabschnitt 36 angeordnet ist. Das Aktuatorgehäuse 60 ist vorzugsweise mittels axialer Befestigungsmittel mit dem Getriebegehäuse 32 verbunden. In einigen Ausführungsformen kann das Aktuatorgehäuse 60 in eine Öffnung eines Wandabschnittes eingesetzt werden, wie es nachstehend noch beschrieben werden wird.

Die Aktuatoranordnung 52 beinhaltet in dem Aktuatorgehäuse 60 eine Fluidverteilereinrichtung, insbesondere in Form eines Drehschieberventils oder einer anderen Multiplexerventileinrichtung. Diese Fluidverteilereinrichtung dient dazu, einen Druckanschluss des Aktuatorgehäuses, der mit der Fluidversorgungseinrichtung 54 verbunden ist, jeweils mit einem Hydraulikzylinder bzw. einer Kammer eines Hydraulikzylinders zu verbinden, der dazu ausgebildet ist, ein jeweiliges Schaltglied 48, 50 in axialer Richtung zu versetzen. Die in dem bzw. an dem Aktuatorgehäuse 60 ausgebildeten Hydraulikzylinder sind dabei parallel zu der Längsachse 23 ausgerichtet. Ferner können an dem Aktuatorgehäuse 60 Lagerstellen zum Führen der Schaltglieder 48, 50 ausgebildet sein, wobei gegenüberliegende axiale Enden der Schaltglieder vorzugsweise an dem Getriebegehäuse gelagert sind, obgleich dies in Fig. 1 nicht näher dargestellt ist.

Die Aktuatoranordnung ist als vormontierte und vorgetestete Einheit ausgebildet und in dieser vorgetesteten und vormontierten Form bei einer Endmontage in dem Getriebegehäuse 32 montiert worden.

In Fig. 1 ist eine Ausführungsform einer erfindungsgemäßen Aktuatoranordnung schematisch dargestellt. Das Aktuatorgehäuse 60 weist axiale Befestigungsmittel 62a, 62b auf, mittels derer das Aktuatorgehäuse 60 in axialer Richtung an dem Getriebegehäuse 32 festlegbar ist.

In dem Aktuatorgehäuse 60 ist ein erster Hydraulikzylinder 66 ausgebildet, der einen ersten Kolben 68 aufweist, dessen Position mittels eines ersten Positionssensors 69 gemessen werden kann. Ferner weist das Aktuatorgehäuse 60 eine erste Lagerstelle 70 zum Führen des ersten Schaltgliedes 48 auf. In dem Aktuatorgehäuse 60 ist ein zweiter Hydraulikzylinder 74 ausgebildet, der einen zweiten Kolben 76 aufweist, dessen Position mittels eines zweiten Positionssensors 77 erfassbar ist. Ferner ist an dem Aktuatorgehäuse 60 eine zweite Lagerstelle 78 zum Führen des zweiten Schaltgliedes 50 ausgebildet. Die Hydraulikzylinder 66, 74 sind parallel zu einer Längsachse 23 ausgebildet, entlang der die Aktuatoranordnung 52 in dem Getriebegehäuse 32 montierbar ist. Kolbenstangen der Kolben 68, 76 sind koaxial mit den jeweiligen Schaltgliedern 48, 50 ausgerichtet und mit diesen über jeweilige Koppeleinrichtungen 72, 80 verbunden. Die Koppeleinrichtungen 72, 80 sind vorzugsweise in axialer Richtung formschlüssige Verbindungen, zum Beispiel Schraubverbindungen, die bei der Montage der Aktuatoranordnung 52 eingerichtet werden.

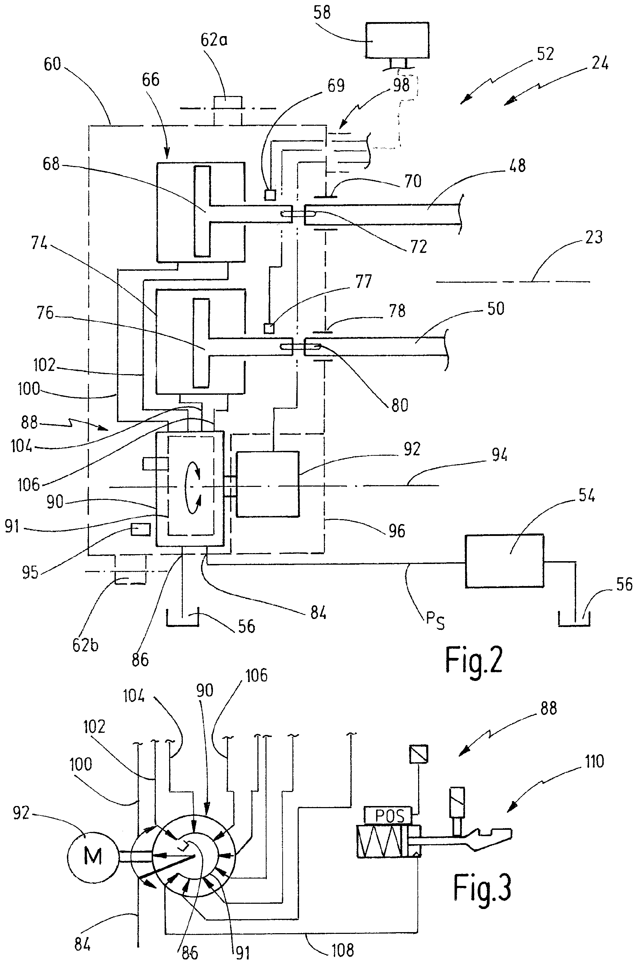

Die Fluidversorgungseinrichtung 54, die in Fig. 2 ebenfalls dargestellt ist, stellt an einem Druckanschluss einen Schaltdruck P_{S} bereit. Der Druckanschluss der Fluidversorgungseinrichtung 54 ist mit einem Druckanschluss 84 verbunden, der an dem Aktuatorgehäuse 60 ausgebildet ist. An dem Aktuatorgehäuse 60 ist ferner ein Anschluss zur Verbindung mit einem Niederdruckbereich verbunden, der nachstehend als Tankanschluss 86 bezeichnet wird. Der Tankanschluss 86 ist vorzugsweise mit dem Fluidsumpf 56 verbunden. Ein Sauganschluss der Fluidversorgungseinrichtung 54 ist vorzugsweise ebenfalls mit dem Fluidsumpf 56 verbunden.

In dem Aktuatorgehäuse 60 ist ferner eine Fluidverteilereinrichtung 88 vorgesehen. Die Fluidverteilereinrichtung 88 weist vorliegend ein Drehschieberventil 90 auf. Ein Gehäuse des Drehschieberventils 90 ist vorzugsweise durch das Aktuatorgehäuse 60 gebildet. In dem Gehäuse des Drehschieberventils 90 ist ein Steuerschieber 91 verdrehbar gelagert. Die Aktuatoranordnung 52 weist ferner einen Antriebsmotor 92 für das Drehschieberventil 90 auf. Der Antriebsmotor 92 ist vorzugsweise ein Elektromotor. Eine Drehachse des Steuerschiebers 91 ist vorliegend koaxial mit einer Drehachse des Antriebsmotors 92 ausgerichtet und in Fig. 2 mit 94 bezeichnet. Die Drehachse 94 ist parallel zu der Längsachse 23 ausgerichtet.

An dem Aktuatorgehäuse 60 ist ferner ein Anschlag 95 ausgebildet, der als Drehanschlag für den Steuerschieber 91 dient. Durch diese Maßnahme kann erreicht werden, dass das Drehschieberventil 90 auf einfache Weise nach einem Reset der Steuereinrichtung 58 neu referenziert werden kann, wenn zur Positionserfassung ein Relativwert-Sensor verwendet wird..

Der Antriebsmotor 92 kann von außen an das Aktuatorgehäuse 60 angeflanscht werden, kann jedoch auch in das Aktuatorgehäuse 60 integriert werden, was in Fig. 2 durch einen entsprechenden Gehäuseabschnitt 96 angedeutet ist.

An dem Aktuatorgehäuse 60 ist ferner eine elektrische Steckverbindung 98 ausgebildet. Die elektrische Steckverbindung 98 dient zur Aufnahme eines Anschlusssteckers, der über eine mehradrige Leitung mit der Steuereinrichtung 58 verbunden ist. Die elektrische Steckverbindung 98 ist mit den Positionssensoren 69, 77 verbunden. Ferner ist die elektrische Steckverbindung 98 vorzugsweise mit dem Antriebsmotor 92 verbunden, um diesen anzutreiben. Ferner können Mittel zur Positionserfassung des Antriebsmotors 92 vorgesehen sein, die ebenfalls über eine in Fig. 2 nicht näher bezeichnete Leitung zu der elektrischen Steckverbindung 98 geführt werden.

In dem Aktuatorgehäuse 60 sind ferner Kanäle zur Verbindung des Drehschieberventils 90 mit jeweiligen Kammern der Hydraulikzylinder 66, 74 ausgebildet. Ein erster Kanal 100 verbindet eine erste Kammer des ersten Hydraulikzylinders 66 mit dem Drehschieberventil 90. Ein zweiter Kanal 102 verbindet eine zweite Kammer des Hydraulikzylinders 66 mit dem Drehschieberventil 90. Ein dritter Kanal 104 verbindet eine erste Kammer des zweiten Hydraulikzylinders 74 mit dem Drehschieberventil 90. Ein vierter Kanal 106 verbindet eine zweite Kammer des zweiten Hydraulikzylinders 74 mit dem Drehschieberventil 90. Das Drehschieberventil 90 ist so ausgebildet, dass es jeweils einen der Kanäle mit dem Druckanschluss 84 verbindet, wohingegen die anderen Kanäle jeweils mit dem Tankanschluss 86 verbunden werden. Die Hydraulikzylinder 66, 74 sind dabei jeweils als doppelt wirkende Zylinder ausgebildet.

Das Aktuatorgehäuse 60 ist vorzugsweise als Kunststoffgehäuse ausgebildet, insbesondere im Spritzgussverfahren. Die Hydraulikzylinder 66, 74 sind vorzugsweise direkt in dem Kunststoffmaterial ausgebildet. Auch das Gehäuse des Drehschieberventils 90 ist direkt durch das Aktuatorgehäuse 60 gebildet. Der Steuerschieber 91 kann ebenfalls aus Kunststoff hergestellt sein. Auch die Kolben 68, 76 können ggf. aus Kunststoff hergestellt sein und können vorzugsweise in einem Spritzgusswerkzeug ausgebildet werden. Ferner ist an dem aus Kunststoff hergestellten Aktuatorgehäuse 60 direkt der Anschluss für die elektrische Steckverbindung 98 ausgebildet. Die elektrischen Leitungen von der elektrischen Steckverbindung 98 zu beispielsweise den Positionssensoren 69, 77 können in das Aktuatorgehäuse 60 aus Kunststoff mit eingespritzt sein, eingeclipst oder montiert sein, beispielsweise durch Stanzgitter oder durch Flexfolien, auf denen geeignete Leiterbahnen ausgebildet sind.

Fig. 3 zeigt in schematischer Form ein Drehschieberventil 90 einer Fluidverteilereinrichtung 88. Das Drehschieberventil 90 entspricht hinsichtlich Aufbau und Funktionsweise generell dem oben beschriebenen Drehschieberventil. Das Drehschieberventil 90 der Fig. 3 weist jedoch nicht nur die Anschlüsse 100, 102 für den ersten Hydraulikzylinder 66 sowie die Anschlüsse 104, 106 für einen zweiten Hydraulikzylinder auf, sondern zwei weitere Paare von Anschlüssen, die mit weiteren Hydraulikzylindern verbindbar sind, beispielsweise zum Einlegen von weiteren Vorwärtsgangstufen und/oder einer Rückwärtsgangstufe. Mit den vier gezeigten Paaren von Anschlüssen des Drehschieberventils 90 lassen sich vier Schaltkupplungsanordnungen betätigen, also beispielsweise sieben Vorwärtsgangstufen und eine Rückwärtsgangstufe.

Ferner weist das Drehschieberventil 90 einen weiteren Anschluss auf, der mit einem fünften Kanal 108 verbunden ist, der mit einer in Fig. 3 schematisch angedeuteten Parksperrenanordnung verbunden ist. In einer Drehposition des Steuerschiebers 91 kann über die Fluidversorgungseinrichtung 54 folglich die Parksperrenanordnung 110 betätigt werden (insbesondere eingelegt werden). Der Parksperrenanordnung 110 kann ein weiterer Positionssensor (POS) zugeordnet sein, der mit der Steuereinrichtung 58 verbunden ist.

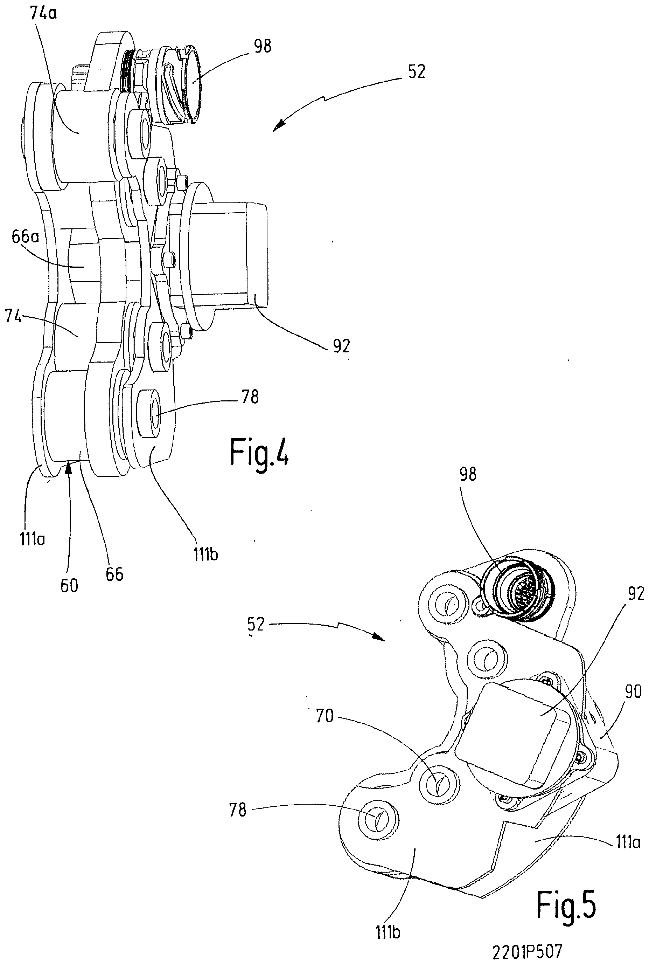

Eine weitere Ausführungsform einer Aktuatoranordnung 52 ist in den Fig. 4 und 5 dargestellt. Diese entspricht hinsichtlich Aufbau und Funktionsweise generell den Aktuatoranordnungen der oben beschriebenen Art. Gleiche Elemente sind daher durch gleiche Bezugszeichen gekennzeichnet. Im Folgenden werden im Wesentlichen die Unterschiede erläutert.

In den Figuren ist gezeigt, dass das Aktuatorgehäuse 60 in axialer Richtung sandwichartig zwischen zwei Anschlussplatten 111a, 111b angeordnet ist. Die Anschlussplatten 111a, 111b können, genauso wie das Aktuatorgehäuse 60, aus Kunststoff hergestellt sein, können jedoch auch aus Metall hergestellt sein. An eine der Anschlussplatten (111b) kann der Antriebsmotor 92 angeflanscht sein. Die Anschlussplatten 111a, 111b können ferner eine Deckelfunktion erfüllen, um beispielsweise die in den Figuren dargestellten Hydraulikzylinder 66, 74 sowie zwei weitere Hydraulikzylinder 66a, 74a in axialer Richtung abzudichten. Ferner können an einer der Anschlussplatten 111b die Lagerstellen 70, 78 etc. für die Schaltglieder 48, 50 etc. ausgebildet sein.

Die Anschlussplatten 111a, 111b können ferner dazu ausgebildet sein, den Raum des Drehschieberventils 90 axial zu begrenzen, innerhalb dessen der Steuerschieber 91 angeordnet ist.

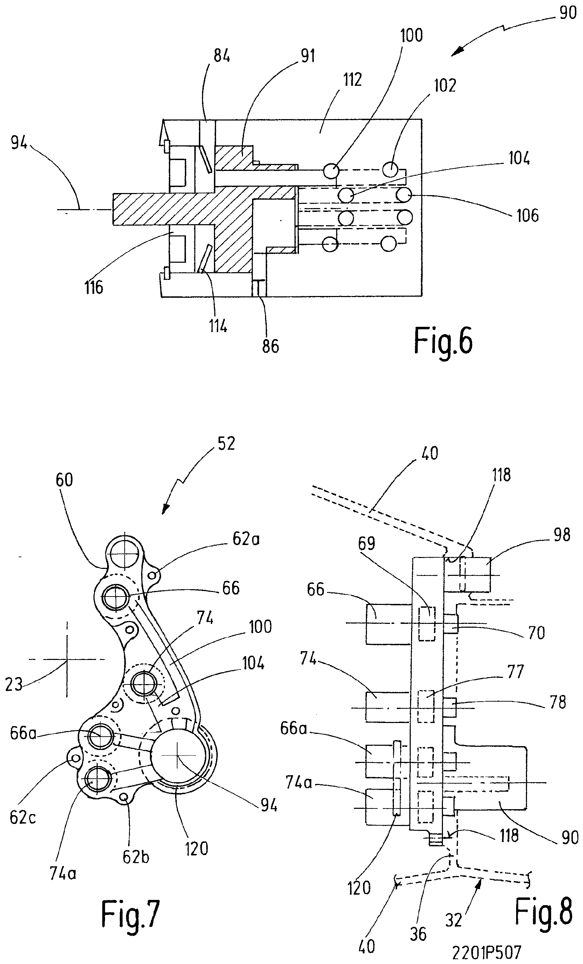

Fig. 6 zeigt in schematischer Längsschnittansicht eine weitere Ausführungsform eines Drehschieberventils 90, das einen radialen Druckanschluss 84 und einen radialen Tankanschluss 86 aufweist. Innerhalb eines Gehäuseblocks 112 des Drehschieberventils 90, der durch das Aktuatorgehäuse 60 gebildet sein kann, ist ein Dreh-Steuerschieber 91 verdrehbar gelagert, der eine axiale Durchbrechung aufweist, die dazu ausgebildet ist, den Druckanschluss 84 mit jeweils einem der axialen Kanäle 100, 102, 104, 106, ... zu verbinden. Der Steuerschieber 91 ist so ausgebildet, dass alle anderen Anschlüsse des Drehschieberventils 90 mit dem Tankanschluss 86 verbunden sind.

Um eine gute Abdichtung zwischen dem Steuerschieber 91 und den jeweiligen Kanälen 100, 102, 104, 106, ... zu erzielen, kann in dem Gehäuseblock 112 eine Andruckfeder vorgesehen sein, die den Steuerschieber 91 in axialer Richtung hin zu den axial angeordneten Kanälen 100, 102, 104, 106, ... andrückt. Ferner ist der Druckanschluss 84 auf der den Kanälen gegenüberliegenden axialen Seite ausgebildet, so dass der über den Druckanschluss 84 bereitgestellte Fluiddruck alternativ oder zusätzlich den Steuerschieber 91 in Richtung gegen die Kanalbohrungen drückt, um an dieser Stelle für eine bessere Abdichtung zu sorgen.

Die Kammer, über die der Steuerschieber 91 in axialer Richtung angedrückt wird, kann durch einen Deckel 116 des Gehäuseblocks 112 verschlossen sein.

Alternativ hierzu ist es möglich, den Steuerschieber 91 konisch auszubilden, wobei der größere Durchmesser hin zu dem Druckanschluss 84 gerichtet ist. In dem Gehäuseblock 112 würde dann ein entsprechender konischer Steuerschiebersitz ausgebildet sein, wobei Kanalbohrungen zum Anschluss an die Kanäle 100, 102, 104, 106 dann in radialer Richtung im Bereich des Kegelmantels ausgebildet sein könnten.

In den Fig. 7 und 8 ist eine weitere Ausführungsform einer Aktuatoranordnung 52 gezeigt, die hinsichtlich Aufbau und Funktionsweise generell den oben beschriebenen Aktuatoranordnungen entsprechen kann. Gleiche Elemente sind daher durch gleiche Bezugszeichen gekennzeichnet. Im Folgenden werden im Wesentlichen die Unterschiede erläutert.

Wie es in Fig. 8 gezeigt ist, weist der erste Wandabschnitt 36 eine Öffnung 118 auf, deren Form an die Form des Aktuatorgehäuses 60 angepasst ist. Das Aktuatorgehäuse 60 ist von der Seite der Kupplungsglocke 40 aus axial in die Öffnung 118 eingesetzt und verschließt diese, vorzugsweise auf abgedichtete Art und Weise. An dem Wandabschnitt 36 sind zu diesem Zweck geeignete Mittel vorgesehen, die mit den Befestigungsmitteln 62a, 62b, 62c zusammenwirken. Ferner kann ggf. eine umfängliche Abdichtung in Form eines O-Ringes oder einer anderen Dichtungsart erfolgen.

Ferner ist in Fig. 7 und 8 gezeigt, dass das Drehschieberventil 90 auf seiner Drehachse 94 mit einem Antriebszahnrad 120 verbunden sein kann, das mit einem weiteren Zahnrad kämmen kann, das mit einer Antriebswelle eines Antriebsmotors verbunden ist. In diesem Fall erfolgt der Antrieb des Drehschieberventils 90 über eine Zahnradstufe. Der Antriebsmotor ist in Fig. 7 und 8 folglich nicht dargestellt.

## Patentansprüche

1. Kraftfahrzeuggetriebe (24) mit einem Getriebegehäuse (32), das einen Zentralgehäuseabschnitt (34) aufweist, der eine Längsachse (23) aufweist, und das im Bereich von Längsenden des Zentralgehäuseabschnittes (34) jeweils einen sich im Wesentlichen radial erstreckenden Wandabschnitt (36, 38) aufweist, mit wenigstens einer Welle (22, 26, 28), die in dem Getriebegehäuse (32) entlang der Längsachse (23) ausgerichtet und drehbar gelagert ist, mit einer Mehrzahl von Schaltkupplungsanordnungen (44, 46) zum Ein- und Auslegen von Gangstufen (1-4) des Kraftfahrzeuggetriebes (24), die jeweils über ein in Bezug auf das Getriebegehäuse (32) axial verschieblich gelagertes Schaltglied (48, 50) betätigbar ist, und mit einer hydraulischen Aktuatoranordnung (52), mittels der die Schaltglieder (48, 50) verschiebbar sind und die eine Mehrzahl von Hydraulikzylindern (66, 74) und eine Fluidverteilereinrichtung (88) aufweist, die mit den Hydraulikzylindern (66, 74) verbunden ist, und die Aktuatoranordnung (52) ein Aktuatorgehäuse (60) aufweist, an dem die Mehrzahl von Hydraulikzylindern (66, 74) festgelegt ist und an dem die Fluidverteilereinrichtung (88) ausgebildet ist, wobei die Aktuatoranordnung (52) als vormontierte Einheit ausgebildet ist, die im Bereich von einem der Wandabschnitte (36, 38) angeordnet ist, und wobei das Aktuatorgehäuse (60) sich quer zu der Längsachse (23) erstreckt und **dadurch gekennzeichnet, dass** das Aktuatorgehäuse axial an dem Getriebegehäuse (32) festgelegt ist.

2. Kraftfahrzeuggetriebe nach Anspruch 1, **dadurch gekennzeichnet, dass** die Mehrzahl von Hydraulikzylindern (66, 74) an dem Aktuatorgehäuse (60) parallel zueinander festgelegt sind und jeweils mit einem der Schaltglieder (48, 50) des Kraftfahrzeuggetriebes (24) koppelbar sind, wobei in das Aktuatorgehäuse (60) die Fluidverteilereinrichtung (88) mit einer Drehschieberventileinrichtung (90) integriert ist, mittels der ein Druckanschluss (84) des Aktuatorgehäuses (60) jeweils mit einem der Hydraulikzylinder (66, 74) verbindbar ist.

3. Kraftfahrzeuggetriebe nach Anspruch 2, **dadurch gekennzeichnet, dass** die Drehschieberventileinrichtung (90) ein Drehschieberventil aufweist, das mittels eines Elektromotors (92) antreibbar ist, dessen Drehachse (94) parallel zu den Hydraulikzylindern (66, 74) ausgerichtet ist.

4. Kraftfahrzeuggetriebe nach Anspruch 2 oder 3, **dadurch gekennzeichnet, dass** an dem Aktuatorgehäuse (60) Befestigungsmittel (62) zum axialen Befestigen des Aktuatorgehäuses (60) an einem Getriebegehäuse (32) ausgebildet sind.

5. Kraftfahrzeuggetriebe nach einem der Ansprüche 2 - 4, **dadurch gekennzeichnet, dass** an dem Aktuatorgehäuse (60) eine Mehrzahl von Lagerstellen (70, 78) zur Führung von jeweiligen Schaltgliedern (48, 50) ausgebildet ist.

6. Kraftfahrzeuggetriebe nach einem der Ansprüche 2 - 5, **dadurch gekennzeichnet, dass** an dem Aktuatorgehäuse (60) wenigstens ein Positionssensor (69, 77) ausgebildet ist, der die Position eines Kolbens (68, 76) eines Hydraulikzylinders (66, 74) erfasst.

7. Kraftfahrzeuggetriebe nach einem der Ansprüche 2 - 6, **dadurch gekennzeichnet, dass** der Drehschieberventileinrichtung (90) wenigstens ein Anschlag (95) an dem Aktuatorgehäuse (60) zugeordnet ist, mittels dessen die Drehposition der Drehschieberventileinrichtung (90) referenzierbar ist.

8. Kraftfahrzeuggetriebe nach einem der Ansprüche 2 - 7, **dadurch gekennzeichnet, dass** das Aktuatorgehäuse (60) aus Kunststoff hergestellt ist.

9. Kraftfahrzeuggetriebe nach Anspruch 8, **dadurch gekennzeichnet, dass** die Hydraulikzylinder (66, 74) durch das Aktuatorgehäuse (60) gebildet sind.

10. Kraftfahrzeuggetriebe nach einem der Ansprüche 1 - 9, **dadurch gekennzeichnet, dass** die Schaltglieder (48, 50) jeweils an dem Aktuatorgehäuse (60) der Aktuatoranordnung (52) gelagert sind.

11. Kraftfahrzeuggetriebe nach einem der Ansprüche 1 - 10, **dadurch gekennzeichnet, dass** ein erster Wandabschnitt (36) der Wandabschnitte (36, 38) einem Eingang des Kraftfahrzeuggetriebes (24) zugewandt ist, wobei die Aktuatoranordnung (52) im Bereich von dem ersten Wandabschnitt (36) angeordnet ist.

12. Kraftfahrzeuggetriebe nach Anspruch 11, **dadurch gekennzeichnet, dass** der erste Wandabschnitt (36) des Getriebegehäuses (32) eine Öffnung (118) aufweist, in die das Aktuatorgehäuse (60) der Aktuatoranordnung (52) eingesetzt ist.

## Claims

1. Motor vehicle transmission (24) having a transmission housing (32) which has a central housing section (34) which has a longitudinal axis (23), and which transmission housing (32) has, in the region of longitudinal ends of the central housing section (34), in each case one substantially radially extending wall section (36, 38), having at least one shaft (22, 26, 28) which is oriented along the longitudinal axis (23) in the transmission housing (32) and is mounted rotatably, having a plurality of shifting clutch arrangements (44, 46) for engaging and disengaging gear stages (1-4) of the motor vehicle transmission (24) which can be actuated in each case via a shifting member (48, 50) which is mounted such that it can be displaced axially in relation to the transmission housing (32), and having a hydraulic actuator arrangement (52), by means of which the shifting members (48, 50) can be displaced and which has a plurality of hydraulic cylinders (66, 74) and a fluid distributor device (88) which is connected to the hydraulic cylinders (66, 74), and the actuator arrangement (52) having an actuator housing (60), on which the plurality of hydraulic cylinders (66, 74) are fixed and on which the fluid distributor device (88) is configured, the actuator arrangement (52) being configured as a preassembled unit which is arranged in the region of one of the wall sections (36, 38), and the actuator housing (60) extending transversely with respect to the longitudinal axis (23), and **characterized in that** the actuator housing is fixed axially on the transmission housing (32).

2. Motor vehicle transmission according to Claim 1, **characterized in that** the plurality of hydraulic cylinders (66, 74) are fixed parallel to one another on the actuator housing (60) and can be coupled in each case to one of the shifting members (48, 50) of the motor vehicle transmission (24), the fluid distributor device (88) being integrated with a rotary slide valve device (90) into the actuator housing (60), by means of which rotary slide valve device (90) a pressure connector (84) of the actuator housing (60) can be connected in each case to one of the hydraulic cylinders (66, 74).

3. Motor vehicle transmission according to Claim 2, **characterized in that** the rotary slide valve device (90) has a rotary slide valve which can be driven by means of an electric motor (92), the rotational axis (94) of which is oriented parallel to the hydraulic cylinders (66, 74).

4. Motor vehicle transmission according to Claim 2 or 3, **characterized in that** fastening means (62) for axially fastening the actuator housing (60) to a transmission housing (32) are configured on the actuator housing (60).

5. Motor vehicle transmission according to one of Claims 2 to 4, **characterized in that** a plurality of bearing points (70, 78) for guiding respective shifting members (48, 50) are configured on the actuator housing (60).

6. Motor vehicle transmission according to one of Claims 2 to 5, **characterized in that** at least one position sensor (69, 77) which detects the position of a piston (68, 76) of a hydraulic cylinder (66, 74) is configured on the actuator housing (60).

7. Motor vehicle transmission according to one of Claims 2 to 6, **characterized in that** the rotary slide valve device (90) is assigned at least one stop (95) on the actuator housing (60), by means of which at least one stop (95) the rotary position of the rotary slide valve device (90) can be referenced.

8. Motor vehicle transmission according to one of Claims 2 to 7, **characterized in that** the actuator housing (60) is manufactured from plastic.

9. Motor vehicle transmission according to Claim 8, **characterized in that** the hydraulic cylinders (66, 74) are formed by way of the actuator housing (60).

10. Motor vehicle transmission according to one of Claims 1 to 9, **characterized in that** the shifting members (48, 50) are mounted in each case on the actuator housing (60) of the actuator arrangement (52).

11. Motor vehicle transmission according to one of Claims 1 to 10, **characterized in that** a first wall section (36) of the wall sections (36, 38) faces an input of the motor vehicle transmission (24), the actuator arrangement (52) being arranged in the region of the first wall section (36).

12. Motor vehicle transmission according to Claim 11, **characterized in that** the first wall section (36) of the transmission housing (32) has an opening (118), into which the actuator housing (60) of the actuator arrangement (52) is inserted.

## Revendications

1. Boîte de vitesses de véhicule automobile (24) comprenant un carter de boîte de vitesses (32), lequel carter comprend une partie de carter centrale (34) qui présente un axe longitudinal (23), et lequel carter comprend, dans la région d'extrémités longitudinales de la partie de carter centrale (34), respectivement une partie de paroi (36, 38) s'étendant sensiblement radialement, au moins un arbre (22, 26, 28) qui est orienté le long de l'axe longitudinal (23) et monté à rotation dans le carter de boîte de vitesses (32), une pluralité d'ensembles embrayages de changement de vitesses (44, 46) pour enclencher et désenclencher des rapports (1-4) de la boîte de vitesses de véhicule automobile (24), lesquels peuvent être actionnés respectivement par le biais d'un organe de changement de vitesse (48, 50) monté mobile axialement par rapport au carter de boîte de vitesses (32), et un ensemble d'actionnement hydraulique (52) au moyen duquel les organes de changement de vitesse (48, 50) sont déplaçables et qui comprend une pluralité de cylindres hydrauliques (66, 74) et un dispositif de distribution de fluide (88) qui est relié aux cylindres hydrauliques (66, 74), et
l'ensemble d'actionnement (52) comprenant un boîtier d'actionneur (60) sur lequel la pluralité de cylindre hydraulique (66, 74) sont fixés et sur lequel le dispositif de distribution de fluide (88) est réalisé, l'ensemble d'actionnement (52) étant réalisé sous forme d'unité prémontée qui est disposée dans la région de l'une des parties de paroi (36, 38), et le boîtier d'actionneur (60) s'étendant transversalement à l'axe longitudinal (23), et **caractérisée en ce que** le boîtier d'actionneur est fixé axialement sur le carter de boîte de vitesses (32).

2. Boîte de vitesses de véhicule automobile selon la revendication 1, **caractérisée en ce que** la pluralité de cylindres hydrauliques (66, 74) sont fixés parallèlement les uns aux autres sur le boîtier d'actionneur (60) et peuvent être accouplés respectivement à l'un des organes de changement de vitesse (48, 50) de la boîte de vitesses de véhicule automobile (24), le dispositif de distribution de fluide (88) doté d'un dispositif à soupape à tiroir rotatif (90) étant intégré dans le boîtier d'actionneur (60), dispositif à soupape à tiroir rotatif au moyen duquel un raccord de pression (84) du boîtier d'actionneur (60) peut être relié respectivement à l'un des cylindres hydrauliques (66, 74).

3. Boîte de vitesses de véhicule automobile selon la revendication 2, **caractérisée en ce que** le dispositif à soupape à tiroir rotatif (90) comprend une soupape à tiroir rotatif qui peut être entraînée au moyen d'un moteur électrique (92) dont l'axe de rotation (94) est orienté parallèlement aux cylindres hydrauliques (66, 74).

4. Boîte de vitesses de véhicule automobile selon la revendication 2 ou 3, **caractérisée en ce que** des moyens de fixation (62) servant à la fixation axiale du boîtier d'actionneur (60) sur un carter de boîte de vitesses (32) sont réalisés sur le boîtier d'actionneur (60).

5. Boîte de vitesses de véhicule automobile selon l'une quelconque des revendications 2 à 4, **caractérisée en ce qu'**une pluralité de points d'appui (70, 78) pour le guidage d'organes de changement de vitesse (48, 50) respectifs sont réalisés sur le boîtier d'actionneur (60).

6. Boîte de vitesses de véhicule automobile selon l'une des revendications 2 à 5, **caractérisée en ce qu'**au moins un capteur de position (69, 77) est réalisé sur le boîtier d'actionneur (60), lequel capteur détecte la position d'un piston (68, 76) d'un cylindre hydraulique (66, 74).

7. Boîte de vitesses de véhicule automobile selon l'une des revendications 2 à 6, **caractérisée en ce qu'**au moins une butée (95) sur le boîtier d'actionneur (60) est associée au dispositif à soupape à tiroir rotatif (90), butée au moyen de laquelle la position angulaire du dispositif à soupape à tiroir rotatif (90) peut être référencée.

8. Boîte de vitesses de véhicule automobile selon l'une des revendications 2 à 7, **caractérisée en ce que** le boîtier d'actionneur (60) est fabriqué à partir de matière synthétique.

9. Boîte de vitesses de véhicule automobile selon la revendication 8, **caractérisée en ce que** les cylindres hydrauliques (66, 74) sont formés à travers le boîtier d'actionneur (60).

10. Boîte de vitesses de véhicule automobile selon l'une des revendications 1 à 9, **caractérisée en ce que** les organes de changement de vitesse (48, 50) sont montés respectivement sur le boîtier d'actionneur (60) de l'ensemble d'actionnement (52).

11. Boîte de vitesses de véhicule automobile selon l'une des revendications 1 à 10, **caractérisée en ce qu'**une première partie de paroi (36) parmi les parties de paroi (36, 38) est tournée vers une entrée de la boîte de vitesses de véhicule automobile (24), l'ensemble d'actionnement (52) étant disposé dans la région de la première partie de paroi (36).

12. Boîte de vitesses de véhicule automobile selon la revendication 11, **caractérisée en ce que** la première partie de paroi (36) du carter de boîte de vitesses (32) comprend une ouverture (118) dans laquelle le boîtier d'actionneur (60) de l'ensemble d'actionnement (52) est inséré.
